(19)

**Europäisches Patentamt**
**European Patent Office**
**Office européen des brevets**

(11) **EP 4 696 651 A1**

(12) **EUROPEAN PATENT APPLICATION**
published in accordance with Art. 153(4) EPC

(43) Date of publication:
**18.02.2026 Bulletin 2026/08**

(51) International Patent Classification (IPC):
*C01B 32/17* (2017.01)

(21) Application number: **25783912.6**

(22) Date of filing: **15.01.2025**

(86) International application number:
**PCT/KR2025/000870**

(87) International publication number:
**WO 2026/010053 (08.01.2026 Gazette 2026/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.07.2024 KR 20240087294**

(71) Applicant: **LG CHEM, LTD.**
**Yeongdeungpo-gu**
**Seoul 07336 (KR)**

(72) Inventors:
• **KIM, Yong Jin**
**Seoul 07796 (KR)**
• **SUNG, Min Chang**
**Seoul 07796 (KR)**

(74) Representative: **Vossius & Partner**
**Patentanwälte Rechtsanwälte mbB**
**Siebertstraße 3**
**81675 München (DE)**

(54) **METHOD FOR PURIFYING CARBON NANOTUBES**

(57) Provided is a method for purifying carbon nanotubes, which enables the high-yield production of high-purity purified carbon nanotubes by heating unpurified carbon nanotubes containing high-content metal oxides as impurities in a gaseous atmosphere while simultaneously supplying a halogen material and an oxygen removing material to the heated unpurified carbon nanotubes to induce a reaction.

【FIG. 2】

**Description**

[Technical Field]

CROSS-REFERENCE TO RELATED APPLICATIONS

This application claims the benefit of and priority to Korean Patent Application No. 10-2024-0087294, filed on July 3, 2024, the entire contents of which are incorporated herein as a part of the specification.

Technical Field

The present disclosure relates to a method for purifying carbon nanotubes, and more particularly, to a method for purifying carbon nanotubes for obtaining high-purity carbon nanotubes in a high yield by purifying unpurified carbon nanotubes including a high content of metal oxides as impurities.

[BACKGROUND]

When a specific grade of carbon nanotubes (CNT) is manufactured, metal oxides such as an aluminum-based oxide ($Al_2O_3$) and a magnesium-based oxide (MgO) are used as a catalyst support, and since the boiling point of the metal oxides is higher than the reaction temperature during manufacture of the carbon nanotubes by about 200°C or higher, a large amount of metal oxides remains in the manufactured carbon nanotubes as impurities. Since the impurities of a metal component such as a metal oxide cause problems such as lowering conductivity of carbon nanotubes or accelerating decomposition of an organic solvent, they need to be removed.

As such, in order to remove the impurities of a metal component included at 50 wt% or more in the carbon nanotubes synthesized in a low purity, conventionally, a method of applying high vacuum in an ultra-high temperature condition of higher than a boiling point of metal component impurities to vaporize impurities, dissolving metal component impurities into a liquid phase using a heated strong acid, for example, nitric acid, hydrochloric acid, and the like, or reacting metal oxides with halogen-containing gas to convert the metal oxides into halogenated metals having a low boiling point, thereby vaporizing halogenated metal component impurities in relatively mild conditions, is used.

Among them, a method of converting the metal components into halogenated metals and vaporizing them is beneficial for commercialization in that it may lower a purification temperature and does not need separate washing or drying. However, when purifying CNT including a large amount of impurities of a metal component such as aluminum-based oxides or magnesium-based oxides used as a catalyst support, a problem in which oxygen produced by substituting the metal oxides with halogen reacts with CNT and burns is caused, which rapidly lowers the yield of CNT. In particular, when the metal oxides exist in an excessive amount in a sample before purification as compared with CNT, a large amount of oxygen is produced during a purification process to burn all CNT. Thus, when amorphous carbon is further added for preventing CNT combustion, the amorphous carbon has a lower oxygen selectivity than CNT and the yield of CNT is still lowered.

Meanwhile, in order to prevent CNT combustion in a purification process, a method of using a halogenated hydrocarbon including carbon or halogenated carbon or mixing a halogen gas with other hydrocarbons was suggested. However, in this case, a solid phase incomplete combustion compound such as coke is formed to clog an exhaust port or produce air pollutants.

Thus, there is a need to develop a purification process of carbon nanotubes, which does not produce incomplete combustion compounds or air pollutants while purifying low-purity unpurified carbon nanotubes containing a large amount of impurities of a metal component to high purity and high yield.

**[SUMMARY]**

[Technical Problem]

In order to solve the problems mentioned in the Background, an object of the present disclosure is to improve the yield and the purity of carbon nanotubes which are purified to minimize carbon nanotube consumption when purifying unpurified carbon nanotubes including a high content of metal oxides as impurities.

Another object of the present disclosure is to provide a method for purifying carbon nanotubes, which does not cause a problem of clogging an exhaust port by preventing formation of solid carbides in exhaust gas produced in a purification process.

However, the object to be solved in the present disclosure is not limited to the object mentioned above, and other objects which are not mentioned may be clearly understood by a person skilled in the art from the following descriptions.

[Technical Solution]

In one general aspect, a method for purifying carbon nanotubes includes: heating unpurified carbon nanotubes including impurities under an inert gas atmosphere; and obtaining purified carbon nanotubes by simultaneously supplying a halogen material and an oxygen removing material to the heated unpurified carbon nanotubes and causing a reaction.

In addition, the impurities may include 50 wt% to 95 wt% of metal oxides based on the total weight of the unpurified carbon nanotubes.

[Advantageous Effects]

According to the method for purifying carbon nanotubes of the present disclosure, the purity of CNT may be improved to improve product quality.

In addition, CNT loss may be minimized to increase product productivity and achieve a cost saving effect, by using a halogen material and an oxygen removing material when purifying unpurified carbon nanotubes synthesized in a low purity.

In addition, clogging may be prevented to secure process safety and prevent pollutant emission, by suppressing production of carbon compounds during a CNT purification process.

An effect which may be obtained in the present disclosure is not limited to the effects mentioned above, and other effects which are not mentioned will be understood clearly by a person with ordinary skill in the art to which the present disclosure pertains from the following description.

[BRIEF DESCRIPTION OF THE DRAWINGS]

FIG. 1 is a graph in which an impurity removal rate and a CNT residual rate are compared when performing purification according to the examples and the comparative example of the present disclosure.

FIG. 2 is a graph in which CNT residual rates in the case in which the impurity removal rate is 95% or more when performing purification by the methods according to the examples and the comparative examples of the present disclosure are compared.

[DETAILED DESCRIPTION]

The terms and words used in the description and claims of the present disclosure are not to be construed limitedly as having general or dictionary meanings but are to be construed as having meanings and concepts meeting the technical ideas of the present disclosure, based on a principle that the inventors are able to appropriately define the concepts of terms in order to describe their own disclosure.

A singular form of a noun corresponding to an item may include one or a plurality of items, unless otherwise explicitly stated in the relevant context.

In the present disclosure, each of the phrases such as "A or B", "at least one or A and B", "at least one of A or B", "A, B, or C", "at least one of A, B, and C", and "at least one of A, B, or C" may include any one of the items listed together with the corresponding phrase of the phrases or all possible combinations of them.

The term "and/or" includes a combination of a plurality of described related constituent elements or any one of a plurality of described related constituent elements.

The terms such as "1st" or "2nd", or "first" or "second" may be simply used for distinguishing a corresponding constituent element from other corresponding constituent elements, and the corresponding constituent elements are not limited in other aspects (e.g.: importance or order).

The terms such as "comprise (include)" or "have" are intended to specify the presence of stated features, steps, operations, constituent elements, parts, or a combination thereof, but do not preclude the presence or addition of one or more other features, numerals, steps, operations, constituent elements, parts, or a combination thereof.

When it is described that a constituent element is positioned "on" other constituent element, it includes not only the case in which the constituent element is in contact with another constituent element, but also the case in which another constituent element is present between the two constituent elements.

In the present disclosure, unless explicitly described to the contrary, a part "comprising(including)" a constituent element will be understood to imply further inclusion of other constituent elements rather than the exclusion of any other constituent elements.

In the present disclosure, the term "combination thereof" included in the expression in a Markush format means a mixture of a combination of one or more selected from the group consisting of constituents described in the expression in a Markush format and means the inclusion of one or more selected from the group consisting of the constituents.

In addition, when unique manufacture and material allowable errors are suggested in the mentioned meaning, the terms such as "about" and "substantially" used in the present disclosure are used in the meaning of the numerical value or in the meaning close to the numerical value, and are used for preventing the disclosure mentioning a correct or absolute numerical value for better understanding of the present disclosure from being unfairly used by an unconscionable infringer.

The term "fluid" used in the present disclosure may include any one or more components of a gas, a liquid, and a solid.

In addition, "pressure" mentioned in the present disclosure refers to a gauge pressure measured based on atmospheric pressure.

The method for purifying carbon nanotubes according to the present disclosure includes a heating process of unpurified carbon nanotubes and a purification process using a halogen material and an oxygen removing material.

According to an exemplary embodiment of the present disclosure, unpurified carbon nanotubes including impurities are heated under an inert gas atmosphere. Specifically, a purification furnace filled with an inert gas may be filled with unpurified carbon nanotubes and then heated.

The unpurified carbon nanotubes according to the present disclosure may be manufactured by growing carbon nanotubes through decomposition of a carbon source using a catalyst support, and a metal catalyst supported on the catalyst support may be a material which promotes growth of carbon nanotubes. As a supported catalyst, Fe, Co, Ni, Mo, and the like-supported alumina or magnesium oxide may be mainly used.

The unpurified carbon nanotubes include a catalyst support such as a metal oxide used when synthesizing CNT as an impurity and may be carbon nanotubes synthesized in a low purity. The low-purity carbon nanotubes may mean that a content of metal oxide as the impurity is higher than a content of CNT. For example, the unpurified carbon nanotubes may include 50 wt% or more metal oxides as the impurities with respect to the total weight of the unpurified carbon nanotubes. For example, the content of the metal oxides with respect to the total weight of the unpurified carbon nanotubes may be 50 wt% to 95 wt%, 60 wt% to 95 wt%, 70 wt% to 95 wt%, or 80 wt% to 95 wt%.

The method for purifying carbon nanotubes according to the present disclosure may be a method which is particularly effective for low-purity unpurified carbon nanotubes including 50 wt% of metal oxides as impurities. In the present disclosure, the low-purity carbon nanotubes and/or the unpurified carbon nanotubes may refer to carbon nanotubes having a CNT purity of less than 50%, preferably less than 30%, and most preferably less than 15%.

According to an exemplary embodiment, the metal oxides may include those selected from the group consisting of $Al_2O_3$, $MgO$, $Fe_2O_3$, $Fe_3O_4$, $Co_3O_4$, and a combination thereof, and may include preferably $Al_2O_3$ and/or $MgO$.

According to an exemplary embodiment, a pressure of the inert gas may be supplied to 500 torr to 1,000 torr, and, for example, may be supplied to a pressure of 600 torr to 900 torr or 700 torr to 800 torr.

According to an exemplary embodiment, the inert gas may include, for example, gas containing nitrogen, helium, neon, argon, krypton, xenon, Radon, or a mixed component thereof, and specifically, a nitrogen gas may be used. Since the inert gas is chemically very stable and has a characteristic of not donating or accepting electrons or sharing electrons, it may serve to flow and move CNT due to inflow of gas without a reaction with CNT.

According to an exemplary embodiment, the heating of unpurified carbon nanotubes may include heating to a temperature of 600°C to 1,500°C, preferably 700°C to 1,500°C, and more preferably 800°C to 1,500°C. When the temperature range is satisfied, energy appropriate for performing a reaction for removing impurities in a purification step described later. For example, when the temperature exceeds the temperature range, CNT damage by a rapid halogenation reaction may be rather accelerated, and when the temperature is below the temperature range, a reaction rate may be low or the reaction may not occur.

In addition, the heating step may be heating at a rate of 10°C/min to 50°C/min, preferably 10°C/min to 40°C/min, and most preferably 10°C/min to 30°C/min, under an inert gas atmosphere. When the heating rate is too low in the heating step, a purification time may be extended. However, when the heating rate is too high, the temperature reaches an oxidation temperature before completely removing moisture or oxygen from a CNT sample and CNT may be damaged, and also, thermal shock may be caused in a purification furnace (such as graphite or quartz) in which a purification process is performed, which may cause a problem in terms of equipment maintenance.

Subsequently, a halogen material and an oxygen removing material may be supplied simultaneously to the heated unpurified carbon nanotubes and reacted, thereby obtaining purified carbon nanotubes. Specifically, the halogen material and the oxygen removing material may be supplied simultaneously into the purification furnace in which the heated unpurified carbon nanotubes are present. By supplying the halogen material and the oxygen removing material simultaneously, a metal oxide corresponding to an impurity is modified into a metal halide and oxygen causing CNT loss may be removed simultaneously.

When the metal oxide is modified into the metal halide, its boiling point may be lowered to vaporize and remove the halogenated metal component impurities under relatively mild conditions. Thus, conventionally, as shown in the following Reaction Formula 1, it is common to remove unpurified CNT impurities by a method of substituting the metal oxide in the unpurified carbon nanotubes with a halogen to halogenate the metal oxide and then vaporizing the metal oxide:

Reaction Formula 1: Unreacted CNT (CNT + metal oxide) + halogen material → CNT + halogenated metal (g) + $O_2$ (g)

Herein, as shown in Reaction Formula 1, oxygen is produced by substituting the metal oxide with the halogen material, and when unpurified CNT having a low content of metal oxides is purified only with a halogen material, the effect of oxygen is insignificant. However, when unpurified carbon nanotubes including 50 wt% or more of metal oxides are purified, a large amount of oxygen is produced, and in a high temperature condition where the purification process is performed, oxygen reacts with CNT and burns. In particular, when the metal oxides are included at 85 wt% or more, CNT may be all consumed by a conventional purification method.

Thus, in order to remove oxygen produced by the reaction of metal oxides and a halogen material as shown in Reaction Formula 1 when purifying unpurified CNT containing a large amount of metal oxides, the method for purifying CNT according to an exemplary embodiment of the present disclosure may prevent consumption of CNT by supplying an oxygen removing material simultaneously with supplying the halogen material to the unreacted CNT in the purification process, and thus, may improve a CNT yield.

The halogen material may be a gas or liquid containing fluorine, chlorine, bromine, iodine, or a mixed component thereof. For example, the halogen material may be $F_2$, $Cl_2$, $Br_2$, $I_2$, HF, HCl, HBr, HI, $CHCl_3$, $CCl_4$, and the like, and preferably, may be a chlorine gas ($Cl_2$).

When the halogen material is a gas at room temperature, a flow velocity of a gaseous halogen material supplied to the unpurified carbon nanotubes may be 0.1 times to 10 times, preferably 0.5 times to 5 times the internal volume of the purification furnace by purification per minute. When the supply flow velocity of the halogen material is too slow, it takes longer for impurities to be removed, and impurities are deposited in an exhaust line to cause pipe clogging. When the supply flow velocity of the halogen material is too fast, halogen material consumption is increased without improvement of purification efficiency, which is not preferred.

Meanwhile, when the halogen material is a liquid at room temperature, the flow velocity of the liquid halogen material supplied to the unpurified carbon nanotubes may be 0.0001 times to 0.01 times, preferably 0.0005 times to 0.005 times the internal volume of the purification furnace by purification per minute (min). When the flow velocity is satisfied, there is no safety problem due to temperature drop or explosion inside the purification furnace, while supplying an appropriate amount of halogen material.

The oxygen removing material is a material which does not produce an incomplete combustion compound or air pollutants when reacting with oxygen and may be a liquid or gas at room temperature. However, when the oxygen removing material is supplied to the unpurified carbon nanotubes, it is preferably in a gas state.

The oxygen removing material which is a liquid at room temperature is a material having a boiling point of 400°C or lower, preferably 50°C to 400°C, and for example, may be acetaldehyde, a formic acid, and the like. The oxygen removing material which is a liquid at room temperature may be supplied in a state of being vaporized in a purification process performed at a temperature of 600°C or higher and reacted with oxygen.

The oxygen removing material which is a gas at room temperature may be, for example, carbon monoxide, formaldehyde, hydrogen sulfide, sulfur dioxide, and the like, and preferably carbon monoxide. For example, in the case in which the oxygen removing material is carbon monoxide (CO), when the halogen material and carbon monoxide are simultaneously supplied, oxygen ($O_2$) produced by the metal oxide modification reaction as shown in Reaction Formula 1 and carbon monoxide (CO) may be reacted to prevent CNT damage, as shown in the following Reaction Formula 2:

Reaction Formula 2: $O_2$ (g) + 2CO (g) → 2$CO_2$ (g)

According to an exemplary embodiment, a step of producing the oxygen removing material may be further included. For example, carbon monoxide among the oxygen removing materials may be added to the purification process, after mixing sulfuric acid and formic acid at 1:1 and then heating to produce carbon monoxide.

In an exemplary embodiment, when both the halogen material and the oxygen removing material are supplied in a gas state, a supply flow rate ratio between the halogen material and the oxygen removing material may be 9:1 to 1:9, for example, 9:1 to 3:7, 7:3 to 4:6, or 6:4 to 4:6, based on volume. Herein, when the ratio range is satisfied, the oxygen removing material may participate in the reaction as much as possible to maximize the amount of halogen material.

The reaction of the unpurified carbon nanotubes, the halogen material, and the oxygen removing material may be performed for 10 minutes, 15 minutes, 30 minutes, 45 minutes, or 60 minutes or more and 120 minutes or less, 150 minutes or less, or 200 minutes or less. When the reaction time (that is, purification time) is too short, impurities are not sufficiently removed to lower the purity of CNT, and thus, the physical properties of CNT may be deteriorated. In addition, when the reaction (purification) time is too long, a CNT residual rate is lowered, so that a minimum CNT yield may not be secured. In addition, the method for purifying CNT according to the present disclosure may secure excellent impurity removal rate and CNT residual rate and simultaneously relatively shorten a total time taken throughout the purification process, without separately performing a reduction reaction for increasing a CNT yield before the halogenation reaction for the metal oxides included in the unpurified CNT.

According to an exemplary embodiment of the present disclosure, heat treating the purified carbon nanotubes to remove residual impurities may be further performed, in which the residual impurities may include amorphous carbon. For example, the heat treatment for removing the amorphous carbon may be performed at 400°C to 500°C. When the heat treatment temperature is too low, the amorphous carbon may not be oxidized, and when the heat treatment temperature is too high, CNT may be oxidized and damaged.

Meanwhile, the impurity removal rate of the purified carbon nanotubes obtained in the method for purifying carbon nanotubes according to the present disclosure may be 80 wt% or more, preferably 90 wt% or more, and more preferably 95 wt% or more, based on the total weight of the impurities in unpurified CNT. The higher impurity removal rate means higher purity of purified CNT. Since the higher the purity of CNT, the better the physical properties such as conductivity, the impurity removal rate needs to be secured so that the physical properties to be desired are achieved.

In addition, the residual rate of the purified carbon nanotubes may be 10 wt% or more, preferably 15 wt% or more, and more preferably 20 wt% or more, based on the total weight of CNT in the unpurified CNT. The higher CNT residual rate means the higher yield of purified CNT, and the lower CNT residual rate means the lower yield of the finally obtained product.

Hereinabove, the method for purifying carbon nanotubes according to the present disclosure has been described and illustrated in the drawings, but the description and the illustration in the drawings are the description and the illustration of only core constitutions for understanding of the present disclosure, and in addition to the process and apparatus described above and illustrated in the drawings, the process and the apparatus which are not described and illustrated separately may be appropriately applied and used for carrying out the method for purifying carbon nanotubes according to the present disclosure.

Hereinafter, the present disclosure will be described in detail through the following examples. However, the following examples are intended to describe the present disclosure in more detail, and the scope of the present disclosure is not limited to the following examples.

[Examples]

Examples 1-1 to 1-3

About 10 g of synthesized CNT (purity: about 10%) including $Al_2O_3$ as an impurity was added to a purification furnace, $N_2$ as an inert gas was purged for 5 minutes, and then heating to 900°C was performed at 10°C/min.

Subsequently, 100 mL of concentrated sulfuric acid (95%) and 100 mL of formic acid were mixed, and heating to 80°C was performed to produce carbon monoxide (CO) gas, which was continuously supplied to the purification furnace. In addition, chlorine ($Cl_2$) gas was supplied to the purification furnace while the carbon monoxide gas supplied simultaneously, and CNT purification was performed for 15 minutes, 30 minutes, and 60 minutes, respectively. At this time, the chlorine gas in the purification furnace was supplied at 90 vol%, and the carbon monoxide gas was supplied at 10 vol%.

Examples 2-1 to 2-3

The processes were performed in the same manner as in Examples 1-1 to 1-3, except that the chlorine gas was supplied at 70 vol% and the carbon monoxide gas was supplied at 30 vol%, to the purification furnace.

Examples 3-1 to 3-3

The processes were performed in the same manner as in Examples 1-1 to 1-3, except that the chlorine gas was supplied at 50 vol% and the carbon monoxide gas was supplied at 50 vol%, to the purification furnace.

Comparative Examples 1-1 to 1-3

About 10 g of synthesized CNT (purity: about 10%) including $Al_2O_3$ as an impurity was added to a purification furnace, $N_2$ as an inert gas was purged for 5 minutes, and then heating to 900°C was performed at 10°C/min.

Subsequently, the CNT purification was performed for 15 minutes, 30 minutes, and 60 minutes, respectively, while supplying only the chlorine gas to the purification furnace.

Comparative Examples 2-1 to 2-3

About 10 g of synthesized CNT (purity: about 10%) including $Al_2O_3$ as an impurity was added to a purification furnace, $N_2$ as an inert gas was purged for 5 minutes, and then heating to 900°C was performed at 10°C/min.

Subsequently, 100 vol% of the carbon monoxide gas as a reducing agent was first supplied to the purification furnace, a reduction reaction was performed for 15 minutes, 30 minutes, and 60 minutes, respectively, 100 vol% of the chlorine gas was sequentially supplied, and then CNT purification was performed for 15 minutes, 30 minutes, and 60 minutes, respectively. At this time, the purification process was performed for a total of 30 minutes, 60 minutes, and 120 minutes, respectively.

Experimental Example

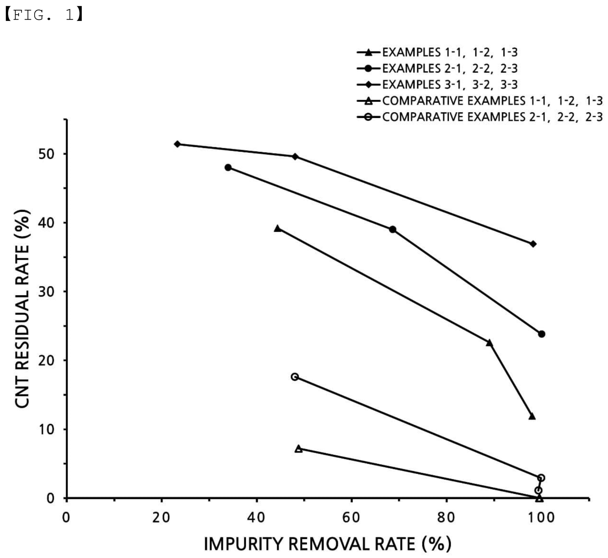

The purification process conditions in the examples and the comparative examples, and the impurity removal rate (%) and the CNT residual rate (%) of the purified CNT were measured and are shown in the following Table 1, and the results are shown in FIG. 1.

Herein, the impurity removal rate and the CNT residual rate were calculated by the following Equation (1) and Equation (2), respectively.

Impurity removal rate (%) = (mass of impurities removed after purification / mass of impurities before purification) * 100          Equation (1):

CNT residual rate (%) = (mass of CNT after purification / mass of CNT before purification) * 100          Equation (2):

Specifically, the upper limits of the impurity removal rate according to Equation (1) and the CNT residual rate according to Equation (2) were 100%, respectively, and for example, the higher impurity removal rate means more removal of impurities and a higher CNT purity, and the higher CNT residual rate means less CNT consumption in the purification process and a higher CNT yield.

[Table 1]

| Classificati on | Purification process conditions | | Impurity removal rate (%) | CNT residual rate (%) |
|---|---|---|---|---|
| | Supply material composition | Process time (min) | | |
| Example 1-1 | $Cl_2$ 90% : CO 10% | 15 | 44.4 | 39.2 |
| Example 1-2 | $Cl_2$ 90% : CO 10% | 30 | 89.0 | 22.6 |
| Example 1-3 | $Cl_2$ 90% : CO 10% | 60 | 98.0 | 11.9 |
| Example 2-1 | $Cl_2$ 70% : CO 30% | 15 | 34.0 | 48.0 |
| Example 2-2 | $Cl_2$ 70% : CO 30% | 30 | 68.6 | 39.0 |
| Example 2-3 | $Cl_2$ 70% : CO 30% | 60 | 100 | 23.8 |
| Example 3-1 | $Cl_2$ 50% : CO 50% | 15 | 23.3 | 51.4 |
| Example 3-2 | $Cl_2$ 50% : CO 50% | 30 | 48.1 | 49.6 |
| Example 3-3 | $Cl_2$ 50% : CO 50% | 60 | 98.2 | 36.9 |
| Comparative Example 1-1 | $Cl_2$ 100% | 15 | 48.8 | 7.2 |
| Comparative Example 1-2 | $Cl_2$ 100% | 30 | 99.6 | 0 |
| Comparative Example 1-3 | $Cl_2$ 100% | 60 | 99.5 | 0 |
| Comparative Example 2-1 | CO 100% → $Cl_2$ 100% | 15 → 15 (30) | 48.1 | 17.6 |
| Comparative Example 2-2 | CO 100% → $Cl_2$ 100% | 30 → 30 (60) | 99.9 | 2.9 |
| Comparative Example 2-3 | CO 100% → $Cl_2$ 100% | 60 → 60 (120) | 99.3 | 1.1 |

Referring to Table 1 and FIG. 1, it was confirmed that when the purification time is the same, Examples 1-1 to 3-3 in which CO gas and $Cl_2$ gas were simultaneously added to perform the purification process had a significantly better CNT residual rate than each comparative example having the same purification time. In addition, it was confirmed that as the fraction of CO gas was increased, the CNT residual rate tended to be improved, but when the fraction of CO gas was increased, a longer purification time was needed for improving the impurity removal rate.

In addition, it was confirmed that Comparative Examples 1-1 to 1-3 in which the purification process was performed using only $Cl_2$ tended to have an excellent impurity removal rate, but there was too much CNT loss with the CNT residual rate of 7.2%, and in particular, in Comparative Examples 1-2 and 1-3, CNT was completely lost. That is, it is considered that it is meaningless to add CO after CNT purification with chlorine gas due to a CNT loss problem.

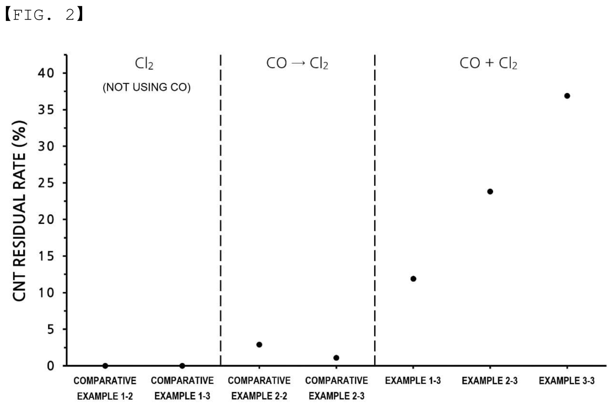

Meanwhile, in FIG. 2, the CNT residual rates of an experimental group having the impurity removal rate of 95% or more, that is, Examples 1-3, 2-3, and 3-3, and Comparative Examples 1-2, 1-3, 2-2, and 2-3 were compared.

Referring to FIG. 2, Examples 1-3, 2-3, and 3-3 according to the present disclosure secured a high CNT purity with the impurity removal rate of 95% or more, while showing the CNT residual rates of 11.9%, 23.8%, and 36.9%, respectively.

However, in Comparative Examples 2-2 and 1-3 which did not use CO gas, CNT was completely consumed in the purification process with the CNT residual rate of 0%. This was because all CNT burned due to a large amount of oxygen produced in the purification process.

Meanwhile, it was confirmed that Comparative Examples 2-2 and 2-3 in which $Cl_2$ gas was added after the $CO_2$ gas was first added as a reducing agent also had a significantly low CNT yield with the CNT residual rate of 2.9% or less.

It is considered that a reaction in which CO and $Cl_2$ convert simultaneously $Al_2O_3$ into $AlCl_3$ [$Al_2O_3(s) + 3CO(g) + 3Cl_2 \rightarrow 2AlCl_3(s) + 3CO_2(g)$] as in the examples according to the present disclosure is a spontaneous reaction ($\Delta G < 0$), but when CO gas is first added as in Comparative Example 2, since a reaction in which CO reduces $Al_2O_3$ into $Al$ [$Al_2O_3(s) + 3CO(g) \rightarrow 2Al(s) + 3CO_2(g)$] is an involuntary reaction ($\Delta G > 0$), it is difficult to reduce metal oxides, and thus, the metal oxide modification reaction is performed only when $Cl_2$ gas is added to cause CNT loss due to oxygen. However, it was confirmed that Comparative Example 2 was affected by CO present in the purification furnace at the beginning of the $Cl_2$ gas addition and had a higher CNT residual rate than Comparative Example 1.

Hereinabove, the exemplary embodiments of the present disclosure have been described, but the present disclosure is not limited thereto, and those with ordinary skill in the art will understand that various changes and modification are possible within the range which is not out of the concept and the scope of the claims described later.

**Claims**

1. A method for purifying carbon nanotubes, the method comprising:

    heating unpurified carbon nanotubes including impurities under an inert gas atmosphere; and
    obtaining purified carbon nanotubes by simultaneously supplying a halogen material and an oxygen removing material to the heated unpurified carbon nanotubes and causing a reaction,
    wherein the impurities comprise 50 wt% to 95 wt% of metal oxides based on the total weight of the unpurified carbon nanotubes.

2. The method for purifying carbon nanotubes of claim 1,
    wherein the oxygen removing material is selected from the group consisting of acetaldehyde, formic acid, carbon monoxide, formaldehyde, hydrogen sulfide, sulfur dioxide, and a combination thereof.

3. The method for purifying carbon nanotubes of claim 1,
    wherein the halogen material is selected from the group consisting of $F_2$, $Cl_2$, $Br_2$, $I_2$, HF, HCl, HBr, HI, $CHCl_3$ $CCl_4$, and a combination thereof.

4. The method for purifying carbon nanotubes of claim 1,
    wherein the metal oxides are selected from the group consisting of $Al_2O_3$, MgO, $Fe_2O_3$, $Fe_3O_4$, $Co_3O_4$, and a combination thereof.

5. The method for purifying carbon nanotubes of claim 1,

    wherein the purification method is performed in a purification furnace, and
    when the halogen material is in a gaseous state at room temperature, a supply flow velocity of the halogen material ranges from 0.1 times to 10 times an internal volume of the purification furnace per minute.

**6.** The method for purifying carbon nanotubes of claim 1,

wherein the purification method is performed in a purification furnace, and
when the halogen material is in a liquid state at room temperature, a supply flow velocity of the halogen material ranges from 0.0001 times to 0.01 times an internal volume of the purification furnace per minute.

**7.** The method for purifying carbon nanotubes of claim 1,
wherein the heating of unpurified carbon nanotubes includes heating to a temperature ranging from 600°C to 1,500°C.

**8.** The method for purifying carbon nanotubes of claim 1,
wherein the heating of unpurified carbon nanotubes includes heating at a rate ranging from 10°C/min to 50°C/min.

**9.** The method for purifying carbon nanotubes of claim 1, wherein the reaction time ranges from 10 minutes to 200 minutes.

**10.** The method for purifying carbon nanotubes of claim 1,
wherein the supplying of the halogen material and the oxygen removing material simultaneously to the heated unpurified carbon nanotubes and reacting them comprises:
modifying the metal oxides by reacting the metal oxides with the halogen material, and simultaneously, removing the oxygen generated by the reaction of the metal oxides and the halogen material by reacting the oxygen with the oxygen removing material.

**11.** The method for purifying carbon nanotubes of claim 1, further comprising:
heat treating the purified carbon nanotubes at a temperature ranging from 400°C to 500°C to remove residual impurities.

**12.** The method for purifying carbon nanotubes of claim 1,
wherein a supply flow rate ratio of the halogen material to the oxygen removing material ranges from 9:1 to 3:7.

**13.** The method for purifying carbon nanotubes of claim 1, wherein the oxygen removing material is supplied in a gaseous state to the heated unpurified carbon nanotubes.

【FIG. 1】

【FIG. 2】

## EP 4 696 651 A1

### INTERNATIONAL SEARCH REPORT

| International application No. |
| --- |
| **PCT/KR2025/000870** |

| A. | CLASSIFICATION OF SUBJECT MATTER |
| --- | --- |

**C01B 32/17**(2017.01)i

According to International Patent Classification (IPC) or to both national classification and IPC

| B. | FIELDS SEARCHED |
| --- | --- |

Minimum documentation searched (classification system followed by classification symbols)

C01B 32/17(2017.01); B01J 23/22(2006.01); C01B 31/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소나노튜브(carbon nanotube), 정제(purification), 불활성 기체(inert gas), 할로겐 (halogen), 산소 제거 물질(oxygen scavenger), 불순물(impurities), 금속산화물(metal oxide), 가열(heat)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 117509622 A (YONGJIANG LABORATORY) 06 February 2024 (2024-02-06)<br>See claims 1-7. | 1-13 |
| Y | KR 10-2015-0105598 A (INDUSTRY-ACADEMY COOPERATION FOUNDATION OF SEJONG UNIVERSITY) 17 September 2015 (2015-09-17)<br>See claims 1-3. | 1-13 |
| Y | US 2018-0186644 A1 (YAZAKI CORPORATION) 05 July 2018 (2018-07-05)<br>See claim 1. | 11 |
| A | KR 10-2017-0028023 A (LG CHEM, LTD.) 13 March 2017 (2017-03-13)<br>See claims 1-14. | 1-13 |
| A | JP 2005-015252 A (PETROLEUM ENERGY CENTER et al.) 20 January 2005 (2005-01-20)<br>See claims 1-4. | 1-13 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **11 April 2025** | **11 April 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/000870**

| Patent document cited in search report | | | Publication date (day/month/year) | Patent family member(s) | | | Publication date (day/month/year) |
|---|---|---|---|---|---|---|---|
| CN | 117509622 | A | 06 February 2024 | None | | | |
| KR | 10-2015-0105598 | A | 17 September 2015 | KR | 10-1586155 | B1 | 20 January 2016 |
| | | | | US | 2015-0251910 | A1 | 10 September 2015 |
| | | | | US | 9365427 | B2 | 14 June 2016 |
| US | 2018-0186644 | A1 | 05 July 2018 | US | 9926200 | B1 | 27 March 2018 |
| KR | 10-2017-0028023 | A | 13 March 2017 | CN | 106794991 | A | 31 May 2017 |
| | | | | CN | 106794991 | B | 26 November 2019 |
| | | | | KR | 10-2002048 | B1 | 19 July 2019 |
| | | | | WO | 2017-039132 | A1 | 09 March 2017 |
| JP | 2005-015252 | A | 20 January 2005 | JP | 3934089 | B2 | 20 June 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240087294